# EUROPÄISCHE PATENTSCHRIFT

(11) **EP 0 431 506 B1**
(45) Veröffentlichungstag und Bekanntmachung des Hinweises auf die Patenterteilung: **20.07.1994**
(21) Anmeldenummer: 90123057.3
(22) Anmeldetag: 01.12.1990
(51) Int. Cl.: F16C 33/20, F16C 27/06

(54) **Elastisches Drehgleitlager**
Elastic sliding bearing for rotating parts
Palier lisse élastique pour rotation

(30) Priorität: 08.12.1989 DE 3940600
(43) Veröffentlichungstag der Anmeldung: 12.06.1991
(73) Patentinhaber: Firma Carl Freudenberg, 69469 Weinheim (DE)
(72) Erfinder: Langhof, Rolf, W-6050 Offenbach (DE); Kohl, Hans-Kurt, W-6946 Gorxheimertal (DE)

(56) Entgegenhaltungen:
- FR-A- 2 173 397
- GB-A- 1 064 597
- US-A- 3 194 614
- US-A- 4 858 293
- PATENT ABSTRACTS OF JAPAN, Band 7, Nr. 145 (M-224)[1290], 24. Juni 1983;
- & JP-A-58 57 915 (NIPPON SEIKO) 06-04-1983

## Beschreibung

Die Erfindung betrifft ein elastisches Drehgleitlager, umfassend ein zu der Drehachse rotationssymmetrisches Innenteil aus einem unnachgiebigen Werkstoff, eine das Innenteil unter radialer Vorspannung mit einer Gleitfläche umschließende Gleithülse aus polymerem Werkstoff und eine auf der Außenseite der Gleithülse unverschiebbar festgelegte Stützhülse aus gummielastischem Werkstoff.

Ein solches Drehgleitlager ist bekannt aus der GB-A-1064597. Die Gleithülse ist dabei mit einer Längsauftrennung versehen und von der Stützhülse elastisch an das durch eine Buchse gebildete Innenteil angepreßt. In Abhängigkeit von der sich während des Einbaus ergebende Lage der Längsauftrennung weist dieses Drehgleitlager eine voneinander abweichende Tragfähigkeit auf, was nicht erwünscht ist. Es ist zwar möglich, die Längsauftrennung wendelförmig zu gestalten. In diesem Falle müssen jedoch erhöhte Herstellkosten in Kauf genommen werden.

Bei dem aus der US-A-4767108 bekannten Drehgleitlager ist die Gleithülse in Umfangsrichtung geschlossen ausgebildet und hinsichtlich ihres Innendurchmessers an den Außendurchmesser einer Innenbuchse angepaßt. Beide Teile müssen relativ verdrehbar sein, weshalb es notwendig ist, bereits im neuwertigen zustand ein Spiel zwischen beiden vorzusehen. Dieses erfährt bereits nach kurzzeitigem Gebrauch eine unerwünschte Vergrößerung, was beispielsweise bei der Verwendung eines solchen Drehgleitlagers in dem Lenkgestänge eines Kraftfahrzeuges zu Klappergeräuschen beim Überfahren von Fahrbahnunebenheiten führt.

Aus der US-A 4,858,293 ist ein Drehgleitlager bekannt, bei dem ein rotationssymmetrisches Innenteil in einer aus polymerem Werkstoff bestehenden Gleithülse relativverdrehbar gelagert ist. Die Gleithülse kann beispielsweise aus Polyethylen bestehen und in einem ersten Montageschritt in radialer Richtung derart aufgeweitet werden, daß das Innenteil problemlos in die Gleithülse eingeführt werden kann. Anschließend wird die Stützhülse, die eine vergleichsweise große Wandstärke aufweist, durch Erwärmung geschrumpft.

Der Erfindung liegt die Aufgabe zugrunde, ein einfach herzustellendes Drehgleitlager zu zeigen, bei dem unter Vermeidung eines unerwünschten Spiels zwischen dem Innenteil und der Gleithülse eine gute Relativverdrehbarkeit der beiden Teile ineinander gewährleistet ist.

Diese Aufgabe wird erfindungsgemäß bei einem Drehgleitlager der eingangs genannten Art mit den kennzeichnenden Merkmalen von Anspruch 1 gelöst. Auf vorteilhafte Ausgestaltungen nehmen die Unteransprüche bezug.

Bei dem erfindungsgemäßen elastischen Drehgleitlager ist es vorgesehen, daß die Gleithülse aus einem in Umfangsrichtung geschlossen ausgebildeten Schrumpfschlauch mit weitgehend übereinstimmender Wandstärke besteht, der durch Erwärmung auf das Innenteil aufgeschrumpft ist und daß der Schrumpfschlauch in aufgeschrumpften Zustand eine Wandstärke von 1 bis 1,5 mm aufweist.

Schrumpfschläuche sind an sich bekannt. Sie können auch die Gestalt eines Formteils haben und lassen sich durch eine nachträgliche Erwärmung in ihrem Durchmesser vermindern. Sie gelangen bisher nur zur Anwendung in Fällen, in denen eine völlig unverrückbare Festlegung auf einem tragenden Innenteil erwünscht ist, beispielsweise dem Kern einer Walze.

Im Rahmen der vorliegenden Erfindung wird das Schrumpfvermögen des die Gleithülse bildenden Schrumpfschlauches demgegenüber verwendet, um eine spielfreie, jedoch relativ verdrehbare Festlegung der Gleithülse auf dem Innenteil mit einfachen Mitteln zu erzielen. In diesem Sinne macht es die Anwendung des Schrumpfverfahrens entbehrlich, den Innendurchmesser der Gleithülse in exakter Weise an den Außendurchmesser des Innenteils anzupassen oder das Innenteil mit einer Längsauftrennung zu versehen. Dennoch wird eine richtungsneutrale Tragfähigkeit erhalten.

Als besonders vorteilhaft hat es sich erwiesen, wenn der Schrumpfschlauch zu 50 bis 80 % seines maximalen Schrumpfvermögens geschrumpft ist. Unter Vermeidung einer zu festen Anpressung an den Außendurchmesser des Innenteils, die die Relativverdrehbarkeit beeinträchtigen könnte, ist das verbleibende Schrumpfvermögen bei einer solchen Ausführung ausreichend, um den sich während der bestimmungsgemäßen Verwendung ergebenden Verschleiß mit ausreichender Sicherheit zu kompensieren.

Der Schrumpfschlauch kann aus irgendeinem der einschlägig verwendeten Werkstoffe bestehen, beispielsweise aus Polyäthylen, Polyvinylidenfluorid, Polyamid oder Polytetrafluoräthylen. Der Vernetzungsgrad soll 40 - 60 % betragen. Die Verwendung von Polyäthylen wird im Rahmen der vorliegenden Erfindung aus Kostengründen bevorzugt. Es wurde gefunden, daß sich nach der Aufschrumpfung eines Schrumpfschlauches aus diesem Werkstoff zunächst eine starr erscheinende Festlegung auf dem Außendurchmesser des unnachgiebigen Innenteils ergibt, die jedoch beweglich gestaltbar ist durch eine einmalige Relativverdrehung der Gleithülse auf den Innenteil. Der hierzu erforderliche Kraftaufwand ist überraschend gering und Stick/Slip-Effekte wurden auch während langer Benutzungsdauer nicht beobachtet.

Unabhängig hiervon ist es selbstverständlich möglich, den Innenteil auf der dem Schrumpfschlauch zugewandten Oberfläche mit einem Gleitmittel zu beschichten. Das Gleitmittel kann beispielsweise aus einem Schmierstoff, aus Wachs und/oder aus PTFE bestehen und bewirkt in den meisten Fällen eine Verminderung der Korrosionsgefahr.

Das Innenteil kann mit wenigstens einer in radialer Richtung nach außen vorstehenden Ringfläche versehen sein, welche von dem Schrumpfschlauch einstückig überdeckt ist. Die Ringfläche dient als Anschlagfläche und gewährleistet eine axiale Führung der Gleithülse durch das Innenteil.

In den meisten Anwendungsfällen ist es erwünscht, eine in axialer Richtung beidseitig wirkende Führung der Gleithülse durch den Innenteil verfügbar zu haben. Für derartige Anwendungsfälle ist es erfindungsgemäß vorgesehen, daß das Innenteil mit zwei Ringflächen der vorstehenden Art versehen ist, die im Bereich der einander axial gegenüberliegenden Enden des Innenteils vorgesehen sind. Zweckmäßigerweise sind die beiden Ringflächen einander spiegelbildlich zugeordnet und spiegelbildlich gestaltet. Sie können mit der Längsrichtung des Drehgleitlagers einen spitzen Winkel einschließen.

Der die Gleithülse bildende Schrumpfschlauch und die aus Gummi bestehende Stützhülse können adhäsiv verbunden sein, was sich am einfachsten realisieren läßt durch unmittelbares Anvulkanisieren des die Stützhülse bildenden Werkstoffkörpers an den Außenumfang der Gleithülse. Hierbei müssen jedoch gewisse Werkstoffpaarungen eingehalten werden, um eine nachteilige Veränderung der Eigenschaften der Gleithülse während der Durchführung des Vulkanisationsprozesses zu verhindern. Um diesbezüglich eine größere Auswahlmöglichkeit verfügbar zu haben, besteht daher die Möglichkeit, die Stützhülse gegebenenfalls in einem separaten Arbeitsschritt zu erzeugen und die zuvor auf das Innenteil aufgebrachte Gleithülse anschließend in deren Aussparung einzupressen.

Der Gegenstand der Erfindung wird nachfolgend anhand der als Anlage beigefügten Zeichnung weiter verdeutlicht. Es zeigen jeweils in halbgeschnittener Darstellung:
- Fig. 1: ein Drehgleitlager, bei dem das Innenteil außenseitig mit einem Gleitmittel beschichtet ist und ebenso wie der Schrumpfschlauch von hohlzylindrischer Gestalt ist.
- Fig. 2, 3 und 5: drei Ausführungen von Drehgleitlagern, bei denen der Schrumpfschlauch das Innenteil im Bereich von sich achsparallel und sich schräg bzw. senkrecht zur Längsrichtung erstreckenden Führungsflächen berührt,
- Fig. 4: ein Drehgleitlager, bei dem das Innenteil mit einer sich in radialer Richtung erstreckenden Ringfläche versehen ist, welche der Schrumpfschlauch überdeckt.

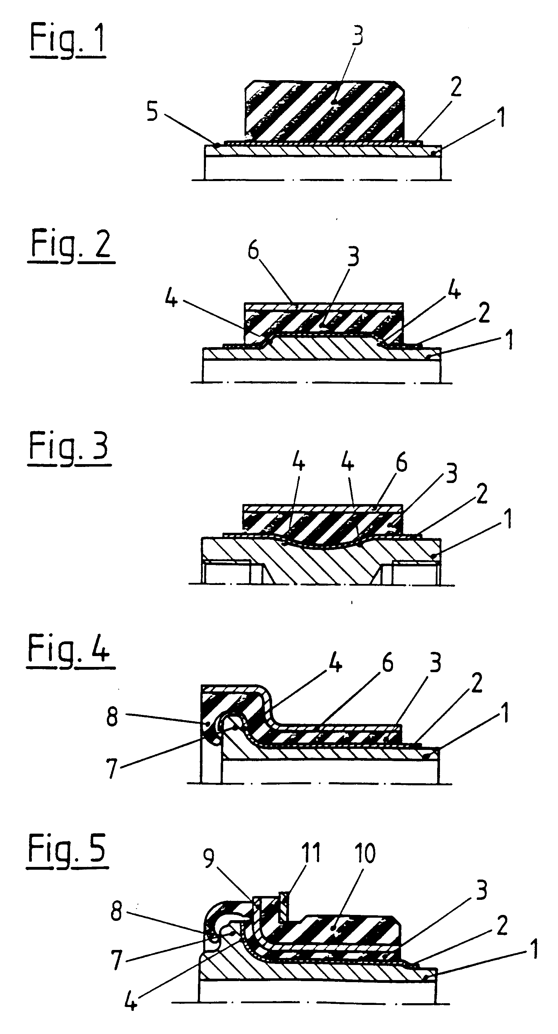

Das in Fig. 1 gezeigte Drehgleitlager ist zur Verwendung im Bereich des Lenkgestänges eines Kraftfahrzeuges bestimmt. Es umfaßt ein Innenteil 1 aus metallischem Werkstoff, welches als Buchse gestaltet und außenseitig mit einer durchgehenden Beschichtung aus einem Gleitmittel 5 versehen ist und der Abstützung des Schrumpfschlauches 2 dient.

Das Innenteil 1 kann bedarfsweise auch aus einem nichtmetallischen Werkstoff bestehen, beispielsweise aus einem glasfaserverstärkten Kunststoff, aus Keramik oder Glas. Der Schrumpfschlauch besteht aus Polyäthylen, welches einen Vernetzungsgrad von 48 % aufweist. Die Wandstärke beträgt im aufgeschrumpften Zustand 1 mm.

Der auf das Innenteil 1 aufgebrachte Schrumpfschlauch 2 ist unter elastischer Aufweitung des Innendurchmessers der Stützhülse 3 in dieser eingepreßt und kraftschlüssig in derselben festgelegt. Die Stützhülse 3 besteht aus gummielastischem Werkstoff einer Härteshore A von 64. Sie erfährt während ihrer bestimmungsgemaßen Verwendung eine Festlegung in einem unnachgiebigen Auge der aufnehmenden Konstruktion. Dieser ist hinsichtlich seines Innendurchmessers so dimensioniert, daß sich eine radiale Verpressung der Stützhülse 3 ergibt.

Die in den Fig. 2 und 3 gezeigten Ausführungen sind der vorstehend beschriebenen ähnlich. Abweichend berühren der Schrumpfschlauch 2 und das Innenteil 1 einander im Bereich von zwei Ringflächen 4, die mit der Längsrichtung des Innenteils einen spitzen Winkel einschließen und die einander spiegelbildlich zugeordnet sind. Hierdurch wird eine in axialer Richtung beidseitig wirkende Führung des Schrumpfschlauches 2 durch das Innenteil 1 erreicht. Die Stützhülse 3 ist durch unmittelbares Anvulkanisieren mit einer sie außenseitig umschließenden, metallischen Hülse 6 verbunden. Die Festlegung auf dem Außenumfang des Schrumpfschlauches 2 erfolgt durch axiales Aufpressen.

Die in Fig. 4 gezeigte Ausführung ist den vorstehend beschriebenen vom Prinzip her ähnlich. Abweichend ist es jedoch vorgesehen, daß nur eine sich in radialer Richtung erstreckende Ringfläche 4 vorgesehen ist, welche den flanschartig ausgebildeten Ringvorsprung 7 des Innenteils 1 auf einer Seite begrenzt. Die Ringfläche erstreckt sich überwiegend in radialer Richtung und geht abgerundet in den übrigen Bereich der Außenseite des Innenteils 1 über. Sie ist vollständig von dem Schrumpfschlauch 2 überzogen.

Auch bei dieser Ausführung ist die aus gummielastischem Werkstoff bestehende Stützhülse 3 durch unmittelbares Anvulkanisieren an der Innenseite einer metallischen Hülse 6 festgelegt. Die Ausformung wurde dabei derart vorgenommen, daß sich im Bereich des Ringvorsprunges des Innenteils 1 eine zusätzliche Dichtlippe 8 ergibt, die den Ringvorsprung 7 im Bereich der der Ringfläche 4 axial gegenüberliegenden Seite dichtend berührt.

Die in Fig. 5 gezeigte Ausführung unterscheidet sich von der vorstehend beschriebenen im wesentlichen dadurch, daß die elastische Stützhülse 3 außenseitig von der anvulkanisierten Zwischenhülse 9 umschlossen ist. Diese ist ihrerseits eingebettet in den Federkörper 10 aus Gummi, welcher mit einer sich in radialer Richtung erstreckenden Anschlagscheibe 11 versehen ist. Der Schrumpfschlauch 2 besteht aus einem Formteil, welches von winkelförmigem Profil ist und den Ringvorsprung 7 in axialer Richtung nur einseitig berührt. Die Wandstärke ist in allen Teilbereichen weitgehend übereinstimmend und beträgt etwa 1,5 mm.

## Patentansprüche

1. Elastisches Drehgleitlager, umfassend ein zu der Drehachse rotationssymmetrisches Innenteil (1) aus einem unnachgiebigen Werkstoff, eine das Innenteil (1) unter radialer Vorspannung mit einer Gleitfläche umschließende Gleithülse (2) aus polymerem Werkstoff und eine auf der Außenseite der Gleithülse unverschiebbar festgelegte Stützhülse (3) aus gummielastischem Werkstoff, dadurch gekennzeichnet, daß die Gleithülse (2) aus einem in Umfangsrichtung geschlossen ausgebildeten Schrumpfschlauch mit weitgehend übereinstimmender Wandstärke besteht, der durch Erwärmung auf das Innenteil (1) aufgeschrumpft ist und daß der Schrumpfschlauch (2) im aufgeschrumpften Zustand eine Wandstärke von 1 bis 1,5 mm aufweist.

2. Drehgleitlager nach Anspruch 1, dadurch gekennzeichnet, daß der Schrumpfschlauch (2) um 50 bis 80 % seines maximalen Schrumpfvermögens geschrumpft ist.

3. Drehgleitlager nach Anspruch 1 bis 2, dadurch gekennzeichnet, daß der Schrumpfschlauch (2) aus einem strahlenvernetzten Kunststoff besteht.

4. Drehgleitlager nach Anspruch 3, dadurch gekennzeichnet, daß der Schrumpfschlauch (2) aus Polyäthylen, Polyvinylidenfluorid, Polyamid oder Polytetrafluoräthylen besteht.

5. Drehgleitlager nach Anspruch 4, dadurch gekennzeichnet, daß der den Schrumpfschlauch (2) bildende Kunststoff einen Vernetzungsgrad von etwa 40 bis 60 % aufweist.

6. Drehgleitlager nach Anspruch 1 bis 5, dadurch gekennzeichnet, daß das Innenteil (1) auf der dem Schrumpfschlauch (2) zugewandten Oberfläche mit einem Gleitmittel beschichtet ist.

7. Drehgleitlager nach Anspruch 1 bis 6, dadurch gekennzeichnet, daß das Innenteil mit wenigstens einer radial nach außen vorstehenden Ringfläche (4) versehen ist und daß der Schrumpfschlauch (2) die Ringfläche (4) einstückig überdeckt.

8. Drehgleitlager nach Anspruch 7, dadurch gekennzeichnet, daß das Innenteil (1) mit zwei Ringflächen (4) versehen ist und daß die beiden Ringflächen (4) im Bereich der einander axial gegenüberliegenden Enden des Innenteils (1) vorgesehen sind.

9. Drehgleitlager nach Anspruch 8, dadurch gekennzeichnet, daß die Ringflächen (4) einander spiegelbildlich zugeordnet sind.

10. Drehgleitlager nach Anspruch 1 bis 9, dadurch gekennzeichnet, daß der Schrumpfschlauch (2) und die Stützhülse (3) adhäsiv verbunden sind.

## Claims

1. A flexible sliding pivot bearing comprising an inner part (1) which is rotationally symmetrical with respect to the rotational axis and is composed of an inflexible material, a sliding bush (2) which surrounds the inner part (1) with a sliding surface, with radial pretension, and is composed of polymeric material, and a supporting bush (3) which is fixed non-displaceably on the outside of the sliding bush and is composed of elastomeric material, characterized in that the sliding bush (2) is composed of a shrink tube which is designed so as to be closed in the circumferential direction, has a largely uniform wall thickness and is shrunk onto the inner part (1) by heating, and in that the shrink tube (2) has a wall thickness of 1 to 1.5 mm in the shrunk state.

2. A sliding pivot bearing according to claim 1, characterized in that the shrink tube (2) is shrunk by 50 to 80% of its maximum shrink capacity.

3. A sliding pivot bearing according to either of claims 1 to 2, characterized in that the shrink tube (2) is composed of a radiation-crosslinked plastic.

4. A sliding pivot bearing according to claim 3, characterized in that the shrink tube (2) is composed of polyethylene, polyvinylidene fluoride, polyamide or polytetrafluoroethylene.

5. A sliding pivot bearing according to claim 4, characterized in that the plastic forming the shrink tube (2) has a degree of crosslinking of approximately 40 to 60%.

6. A sliding pivot bearing according to any of claims 1 to 5, characterized in that the inner part (1) is coated on the surface facing the shrink tube (2) with a lubricant.

7. A sliding pivot bearing according to any of claims 1 to 6, characterized in that the inner part is provided with at least one radially outwardly projecting annular surface (4) and in that the shrink tube (2) covers the annular surface (4) in one piece.

8. A sliding pivot bearing according to claim 7, characterized in that the inner part (1) is provided with two annular surfaces (4) and in that the two annular surfaces (4) are provided in the region of the ends of the inner part (1), which are axially opposite one another.

9. A sliding pivot bearing according to claim 8, characterized in that the annular surfaces (4) have a mirror-image relation to one another.

10. A sliding pivot bearing according to any of claims 1 to 9, characterized in that the shrink tube (2) and the supporting bush (3) are adhesively bonded.

## Revendications

1. Palier lisse élastique pour rotation, comportant un élément intérieur (1) à symétrie de révolution par rapport à l'axe de rotation et constitué d'un matériau non flexible, un manchon de glissement (2) entourant l'élément intérieur (1) avec précontrainte radiale par une surface de glissement et constitué d'un matériau polymère ainsi qu'un manchon d'appui (3) maintenu sans possibilité de déplacement sur le côté extérieur du manchon de glissement et constitué d'un matériau ayant l'élasticité du caoutchouc, caractérisé en ce que le manchon de glissement (2) se compose d'un tube flexible rétractable, fermé dans une direction circonférencielle, ayant une épaisseur de paroi constante dans une large mesure et qui est rétracté par échauffement sur l'élément intérieur (1) et en ce que le tube flexible rétractable (2) a dans l'état rétracté une épaisseur de paroi de 1 à 1,5 mm.

2. Palier lisse élastique pour rotation selon la revendication 1, caractérisé en ce que le tube flexible rétractable (2) est rétracté en correspondance à 50 à 80 % de sa capacité de rétraction.

3. Palier lisse élastique pour rotation selon une des revendications 1 et 2, caractérisé en ce que le tube flexible rétractable (2) se compose d'une matière plastique réticulée par rayonnement.

4. Palier lisse élastique pour rotation selon la revendication 3, caractérisé en ce que le tube flexible rétractable (2) se compose de polyéthylène, de fluorure de polyvinylidène, de polyamide ou de polytétrafluoréthylène.

5. Palier lisse élastique pour rotation selon la revendication 4, caractérisé en ce que la matière plastique constituant le tube flexible rétractable (2) a un degré de réticulation compris environ entre 40 et 60%.

6. Palier lisse élastique pour rotation selon l'une des revendications 1 à 5, caractérisé en ce que l'élément intérieur (1) est recouvert d'un agent de glissement sur la surface dirigée vers le tube flexible rétractable (2).

7. Palier lisse élastique pour rotation selon une des revendications 1 à 6, caractérisé en ce que l'élément intérieur est pourvu d'au moins une surface annulaire (4) faisant saillie radialement vers l'extérieur et en ce que le tube flexible rétractable (2) recouvre en totalité la surface annulaire (4).

8. Palier lisse élastique pour rotation selon la revendication 7, caractérisé en ce que l'élément intérieur (1) est pourvu de deux surfaces annulaires (4) et en ce que les deux surfaces annulaires (4) sont situées dans la zone des extrémités de l'élément intérieur (1) qui sont disposées axialement en regard l'une de l'autre.

9. Palier lisse élastique pour rotation selon la revendication 8, caractérisé en ce que les surfaces annulaires (4) sont disposées mutuellement symétriquement.

10. Palier lisse élastique pour rotation selon une des revendications 1 à 9, caractérisé en ce que le tube flexible rétractable (2) et le manchon d'appui (3) sont reliés par adhésif.
